# FASCICULE DE BREVET EUROPEEN

(11) **EP 4 206 907 B1**
(45) Date de publication et mention de la délivrance du brevet: **10.12.2025**
(21) Numéro de dépôt: 22216856.9
(22) Date de dépôt: 28.12.2022
(51) Int. Cl.: G06F 8/65, G06F 11/3668, G06F 11/3698

(54) **PROCÉDÉ ET SYSTÈME DE SUPERVISION DE MISE À JOUR DE LOGICIEL DE SUPPORT DANS UNE INFRASTRUCTURE DE FOURNITURE DE SERVICES**
VERFAHREN UND SYSTEM ZUR ÜBERWACHUNG DER AKTUALISIERUNG VON MEDIENSOFTWARE IN EINER DIENSTBEREITSTELLUNGSINFRASTRUKTUR
METHOD AND SYSTEM FOR SUPERVISING THE UPDATING OF THE SUPPORT SOFTWARE OF A SERVICE PROVIDING INFRASTRUCTURE

(30) Priorité: 29.12.2021 FR 2114612
(43) Date de publication de la demande: 05.07.2023
(73) Titulaire: THALES, 92400 Courbevoie (FR)
(72) Inventeur: JAOUEN, Laurent, 35136 SAINT JACQUES DE LA LANDE (FR); RUGET, Frédéric, 75008 PARIS (FR)
(74) Mandataire: Lavoix

(56) Documents cités:
- KR-A- 20050 043 982
- US-A1- 2020 019 493
- US-B1- 10 678 528

## Description

La présente invention concerne un procédé et un système de supervision de mise à jour de logiciel de support dans une infrastructure de fourniture de services.

L'invention se situe dans le domaine de la sécurisation des systèmes d'information, et plus particulièrement des infrastructures de fourniture de services à des clients.

La fourniture d'infrastructure de dispositifs de calcul et de stockage de données distants est largement développée, connue généralement sous le nom de « cloud computing ». De manière classique, une telle infrastructure est fournie par un fournisseur de services, les dispositifs de calcul étant gérés par le fournisseur de services. Un client, par exemple une entreprise, obtient une quantité de stockage de données et/ou une capacité de calcul, accessibles via un réseau de communication (e.g. Internet). Dans un tel système, un logiciel de support (i.e. l'ensemble d'opérations et services mis à disposition) est mis en œuvre.

Dans ce contexte, se posent des problèmes accrus de sécurité des données et de risque d'accès sans autorisation, potentiellement malveillant, aux données et/ou aux opérations du client.

L'invention se situe dans ce contexte technologique de sécurisation des opérations et services fournis par le cloud computing, pour créer une infrastructure de confiance (ou « trusted cloud »). La notion de confiance est liée à la garantie d'un niveau de sécurité offert par un système informatique.

Dans le cadre du « cloud computing », il est usuel que le fournisseur de services propose des mises à jour régulières du logiciel de support. De manière classique, toute mise à jour est supervisée avant d'être déployée, par des tests dits de non-régression, afin de s'assurer que la mise à jour n'introduit pas de dégradation (ou régression) de fonctionnement par rapport à une version précédente du logiciel de support, avant la mise à jour.

A fortiori dans un contexte d'une infrastructure de confiance, outre la notion de compatibilité de fonctionnement, il est critique de garantir que toute mise à jour du logiciel de support n'introduit pas de brèche de sécurité.

Ainsi, dans le contexte d'une infrastructure de confiance, un plus grand nombre de tests de non-régression doit être mis en œuvre pour garantir un niveau de sécurité requis.

De plus, cela s'avère critique dans le cas où un grand nombre de mises à jour est proposé, et à une fréquence élevée. Cela est plus particulièrement le cas dans le cadre des infrastructures de services de type 'cloud computing', dans lesquelles des mises à jour sont fournies à une fréquence très élevée, pouvant aller jusqu'à plusieurs mises à jour par seconde.

On connaît des méthodes de supervision de mise à jour de logiciel de support dans des contextes différents, lorsque les mises à jour sont fournies à une plus faible fréquence, par exemple tous les mois.

Ces méthodes ne sont pas adaptées dans le cas d'une fourniture de mises à jour de logiciel à fréquence élevée, et a fortiori dans un contexte d'exécution avec des contraintes de sécurité fortes.

Le document US 2020/019493 A1 décrit un procédé de test de déploiement de mises à jour logicielles, mettant en œuvre des tests de non-régression.

L'invention a pour but de remédier aux inconvénients de l'état de la technique précités.

L'invention est spécifiée par les revendications indépendantes annexées. En outre, des modes de réalisation préférés sont définis par les revendications dépendantes.

A cet effet, l'invention propose, selon un aspect, un procédé de supervision de mise à jour de logiciel de support dans une infrastructure de fourniture de services, le procédé comportant une réception d'une pluralité de mises à jour du logiciel de support, chaque mise à jour comportant au moins une commande de modification du logiciel de support et/ou au moins un paramètre ou un fichier de configuration, et une réception d'au moins une commande de déploiement de mise(s) à jour impactant au moins un composant du logiciel de support. Ce procédé de supervision étant mis en œuvre par au moins un processeur d'un dispositif électronique programmable et comportant des étapes de :
- suite à une réception de commandes de déploiement de mise à jour, sélection d'une commande de déploiement à traiter, dans l'ordre d'arrivée, dite commande de déploiement courante,
- détermination d'un type de ladite commande de déploiement courante, et d'au moins un composant logiciel impacté par la mise à jour en fonction du type de commande de déploiement, et pour chacun desdits composants logiciels impactés, mise à jour dynamique d'une structure de mémorisation courante de tests de non-régression à effectuer et d'une structure de mémorisation de tests de non-régression associée audit type de commande de déploiement,
- exécution de ladite commande de déploiement courante dans un environnement de test, l'environnement de test étant analogue à ladite infrastructure de fourniture de services,
- exécution successive des tests de non-régression de la structure de mémorisation courante de tests de non-régression à effectuer, et lorsque tous les tests de non-régression de ladite structure de mémorisation courante et tous les tests de la structure de mémorisation de tests de non-régression associée audit type de commande de déploiement sont exécutés avec succès, approbation d'une exécution de ladite commande de déploiement courante dans ladite infrastructure de fourniture de services.

Avantageusement, le procédé de supervision de mise à jour de logiciel de support proposé met en œuvre des tests de non-régression dans un environnement de test avant déploiement sur l'infrastructure de fourniture de services. Avantageusement, une liste courante de tests de non-régression est elle-même mise à jour dynamiquement.

Le procédé de supervision de mise à jour de logiciel selon l'invention peut également présenter une ou plusieurs des caractéristiques ci-dessous, prises indépendamment ou selon toutes les combinaisons techniquement envisageables.

Chacune desdites structures de mémorisation est une liste.

Le procédé comporte, suite à la détermination du type de commande de déploiement, une vérification consistant à déterminer si ledit type de commande de déploiement fait partie d'un ensemble de types de commandes de déploiement non encore approuvées.

Suite à l'approbation de ladite commande de déploiement courante, le type de ladite commande de déploiement est effacé dudit ensemble de types de commandes de déploiement non encore approuvées.

L'étape de détermination du type de commande de déploiement met en œuvre une structure de mémorisation de types de commandes déploiement préalablement mémorisée, et la détermination d'au moins un composant logiciel impacté utilise une structure mémorisant une liste de composants logiciels impactés par chaque type de commande de déploiement.

L'approbation comporte un marquage horodaté et une mémorisation d'informations caractéristiques de ladite commande de déploiement.

Selon un autre aspect, l'invention concerne un système de supervision de mise à jour de logiciel de support dans une infrastructure de fourniture de services, le système comportant un module de réception d'une pluralité de mises à jour du logiciel de support, chaque mise à jour comportant au moins une commande de modification du logiciel de support et/ou au moins un paramètre ou un fichier de configuration, et de réception d'au moins une commande de déploiement de mise à jour impactant au moins un composant du logiciel de support. Ce système de supervision comporte au moins un processeur d'un dispositif électronique programmable configuré pour mettre en œuvre :
- un module de sélection d'une commande de déploiement à traiter, dans l'ordre d'arrivée, dite commande de déploiement courante,
- un module de détermination d'un type de ladite commande de déploiement courante, et d'au moins un composant logiciel impacté par la mise à jour en fonction du type de commande de déploiement, et pour chacun desdits composants logiciels impactés, un module de mise à jour dynamique d'une structure de mémorisation courante de tests de non-régression à effectuer et d'une structure de mémorisation de tests de non-régression associée audit type de commande de déploiement,
- un module d'exécution de ladite commande de déploiement courante dans un environnement de test, l'environnement de test étant analogue à ladite infrastructure de fourniture de services,
- une exécution successive des tests de non-régression de la structure de mémorisation courante de tests de non-régression à effectuer, et lorsque tous les tests de non-régression de ladite structure de mémorisation courante et tous les tests de la structure de mémorisation de tests de non-régression associée audit type de commande de déploiement sont exécutés avec succès, un module d'approbation d'une exécution de ladite commande de déploiement courante dans ladite infrastructure de fourniture de services.

Avantageusement, le système de de supervision de mise à jour de logiciel selon l'invention est configuré pour mettre en œuvre un procédé de supervision de mise à jour de logiciel de support selon tous ses modes de réalisation.

Le système de supervision de mise à jour de logiciel selon l'invention peut également présenter une ou plusieurs des caractéristiques ci-dessous, prises indépendamment ou selon toutes les combinaisons techniquement envisageables.

Il comporte en outre une unité électronique de stockage centralisé configurée pour mémoriser des commandes de modification du logiciel de support, des commandes de modification d'au moins un paramètre ou d'un fichier de configuration, et/ou d'au moins une commande de déploiement de mise à jour.

Il comporte en outre la première unité de mémoire configurée pour mémoriser :
- une structure de mémorisation des composants logiciels de l'infrastructure de services,
- une structure de mémorisation des tests de non-régression à effectuer pour valider chaque composant logiciel,
- une structure de mémorisation des types de commandes de déploiement,
- une structure de mémorisation des composants logiciels impactés par chaque type de commande de déploiement.

Le système comporte en outre une deuxième unité de mémoire configurée pour mémoriser :
- une liste de commandes de déploiement, rangées sous forme d'une file d'attente dans leur ordre d'arrivée,
- une structure de mémorisation contenant un ensemble de types des commandes de déploiement non encore approuvées, et pour chaque type de commande de déploiement non encore approuvée, une liste de tests de non-régression à effectuer associée ;
- une liste courante de tests de non-régression à effectuer.

Selon un autre aspect, l'invention concerne un support d'enregistrement d'informations, sur lequel sont mémorisées des instructions logicielles pour l'exécution d'un procédé de supervision de mise à jour de logiciel de support tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont exécutées par un dispositif électronique programmable, mettent en œuvre un procédé de supervision de mise à jour de logiciel de support tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
la figure 1 est une représentation schématique d'un système de fourniture de services à un client comportant un système de supervision de mise à jour de logiciel de support selon un mode de réalisation ;
la figure 2 est une illustration schématique de structures de mémorisation utilisées par un procédé de supervision de mise à jour de logiciel de support selon un mode de réalisation ;

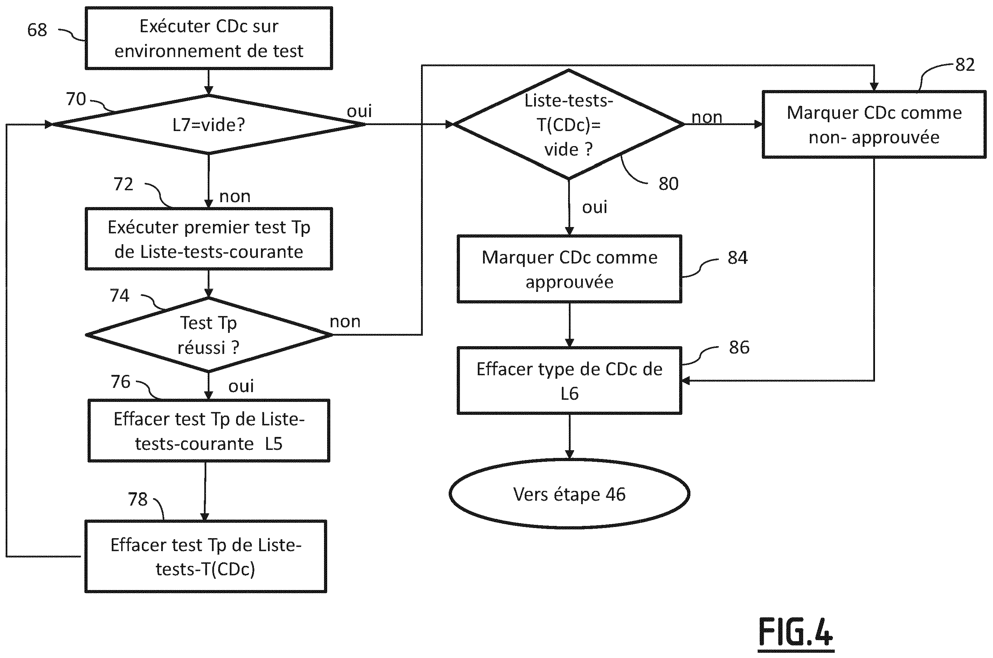

les figures 3 et 4 représentent un organigramme des principales étapes d'un procédé de supervision de mise à jour de logiciel de support selon un mode de réalisation.

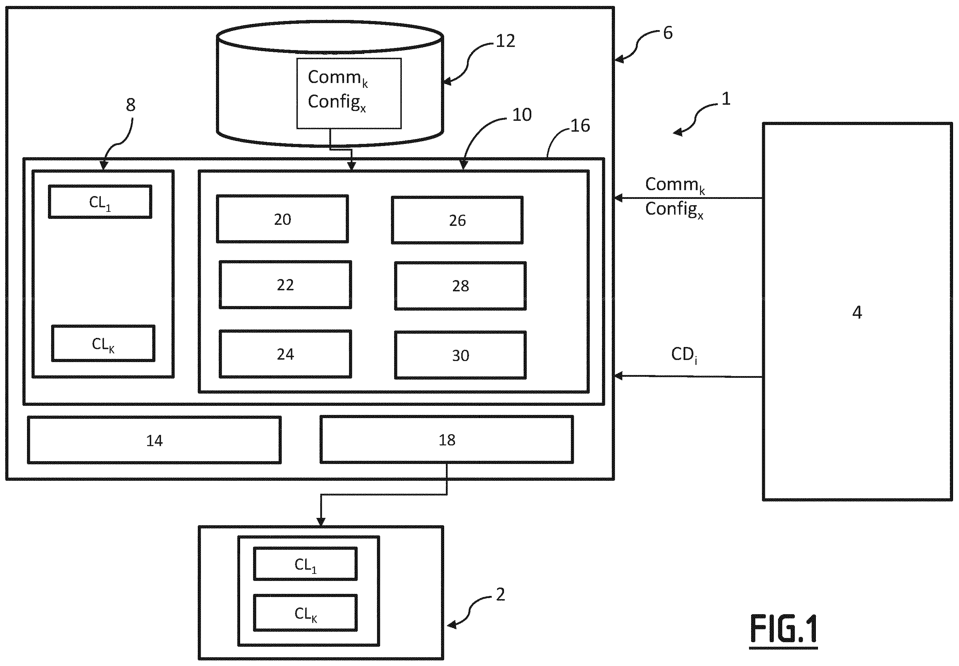

La figure 1 illustre schématiquement un système 1 de fourniture de services à un client (non représenté). Le système 1 comporte une infrastructure de fourniture de services 2, représentée très schématiquement ici, cette infrastructure implémentant un système d'exploitation, des logiciels, des bibliothèques de fonctions, désignés ici par le terme générique de « logiciel de support ».

L'infrastructure 2 est un système informatique, composé de plusieurs dispositifs électroniques programmables (e.g. ordinateurs) connectés entre eux, non représentés ici.

Le système 1 comporte également un système 4 fournisseur de mises à jour de logiciel de support destinées à l'infrastructure 2. Le système 4 est également un système informatique, composé d'un ou plusieurs dispositifs électroniques programmables (e.g. ordinateurs) connectés entre eux, non représentés ici.

Le terme services désigne ici des services logiciels, par exemple des services de stockage de données du client, de mises en œuvre de calculs pour le client, de tels services étant plus généralement connus sous le nom de « cloud computing ».

Le système 1 comporte également un système 6 de supervision de mise à jour de logiciel de support.

Ce système de supervision 6 comporte notamment un environnement de test 8, qui est une image de l'infrastructure de fourniture de services 2, i.e. un système informatique distinct, mettant en œuvre le même système d'exploitation et les mêmes services que l'infrastructure 2.

En particulier, l'environnement de test 8 met en œuvre les mêmes composants logiciels CL₁...CL_{K} que l'infrastructure 2.

On entend ici par composant logiciel une brique logicielle de l'infrastructure de services 2, comportant des instructions de code (instructions logicielles) exécutable par un dispositif électronique programmable.

L'ensemble des composants logiciels CL₁ à CL_{K} forme le logiciel de support mis en œuvre par l'infrastructure de fourniture de services 2.

Le nombre K de composants est bien entendu variable et relatif à l'application, et peut aller jusqu'à plusieurs milliers.

Le système de supervision 6 comporte de plus un dispositif 10 de contrôle de déploiement de mises à jour de logiciel de support, ainsi qu'une unité électronique de stockage centralisé (en anglais « repository ») 12.

Dans un mode de réalisation, l'environnement de test 8 et le dispositif 10 de contrôle de déploiement de mises à jour de logiciel sont chacun mis en œuvre par un dispositif électronique programmable ou plusieurs dispositifs électroniques programmables interconnectés.

Le système de supervision 6 comporte notamment une unité de traitement 14, .e.g. un ou plusieurs processeurs de calcul et une unité de mémoire électronique 16, adaptées à communiquer via un bus de communication (non représenté).

Le système 6 comporte également une ou plusieurs interfaces de communication 18 adaptées pour communiquer avec des dispositifs distants, par un protocole de communication choisi, par exemple un protocole filaire et/ou un protocole de communication radio.

Le dispositif 10 de contrôle de déploiement est configuré pour mettre en œuvre :
- un module 20 de réception de mises à jour, sous forme de commandes Commₖ et/ou de paramètres ou de fichiers de configuration Configₓ, et de réception commandes de déploiement de mise(s) à jour de l'infrastructure 2 ;
- un module 22 de détermination de composants logiciels CL₁,..., CLₖ impactés par une ou plusieurs commande(s) de déploiement de mise à jour ;
- un module 24 de gestion dynamique d'une structure de mémorisation courante (e.g. une liste) de tests de non-régression à effectuer,
- un module 26 de gestion dynamique d'un ensemble de commandes de déploiement de mise à jour non approuvées et de tests de non-régression associés,
- un module 28 de mise en œuvre de tests de non-régression, qui effectue une gestion dynamique d'un ensemble de commandes de mise en œuvre de tests de non-régression ;
- un module 30 d'approbation de l'exécution d'une commande de déploiement de mise(s) à jour dans l'infrastructure 2.

Les mises à jour du logiciel de support comportent la mise en œuvre d'une ou plusieurs commande(s) de modification de logiciel Commₖ reçues et/ou de la modification de paramètres ou de fichiers de configuration selon les fichiers Configₓ reçus.

Une commande de déploiement de mise(s) à jour CDi consiste à commander la mise en exécution (déploiement), sur l'infrastructure 2, d'au moins une commande de modification de logiciel et/ou d'au moins un paramètre/fichier de configuration reçu.

En d'autres termes, une commande de déploiement est une commande d'installation d'une nouvelle « version » du logiciel de support dans l'infrastructure 2.

Le nombre de composants logiciels mis à jour varie entre 1 pour une commande de déploiement consistant à changer un paramètre de configuration d'un composant à plusieurs milliers pour une commande de déploiement qui consiste à modifier le noyau du système d'exploitation utilisé par les composants du système global.

On appelle composants logiciels les composants logiciels dont le fonctionnement est susceptible d'être modifié suite à une mise à jour. Les composants logiciels impactés peuvent être impactés directement (e.g. modifiés) ou indirectement (e.g. leur fonctionnement est susceptible d'être modifié suite à la modification d'un paramètre de configuration ou d'un autre composant logiciel) par un type de commande de déploiement. L'ensemble des composants logiciels impactés par un type de commande de déploiement forme le périmètre associé au type de commande de déploiement.

Selon l'invention, les commandes de déploiement ne sont exécutées sur l'infrastructure 2 qu'après approbation par le module 30 mis en œuvre par le dispositif 10 de contrôle de déploiement.

L'approbation est subordonnée à une réussite d'un ensemble de tests de non-régression, ces tests étant des tests à effectuer suite à la modification par la ou les mises à jour d'un ou plusieurs composants logiciels parmi CL₁ à CL_{K}.

Le terme test de non-régression est appliqué ici pour tout test à appliquer, le but étant de détecter d'éventuelles régressions après l'application de la mise à jour, qu'il s'agisse d'une régression par rapport au bon fonctionnement du logiciel ou une régression en termes de sécurité.

Dans un mode de réalisation, les modules 20, 22, 24, 26, 28, 30 sont réalisés sous forme d'instructions logicielles formant un programme d'ordinateur, qui, lorsqu'il est exécuté par un dispositif électronique programmable, met en œuvre un procédé de supervision de mise à jour de logiciel de support dans une infrastructure de fourniture de services selon l'invention.

En variante non représentée, les modules 20,22, 24, 26, 28, 30 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*)*,* ou encore de circuits intégrés dédiés, tels que des ASIC (de l'anglais *Application Specific Integrated Circuit*).

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

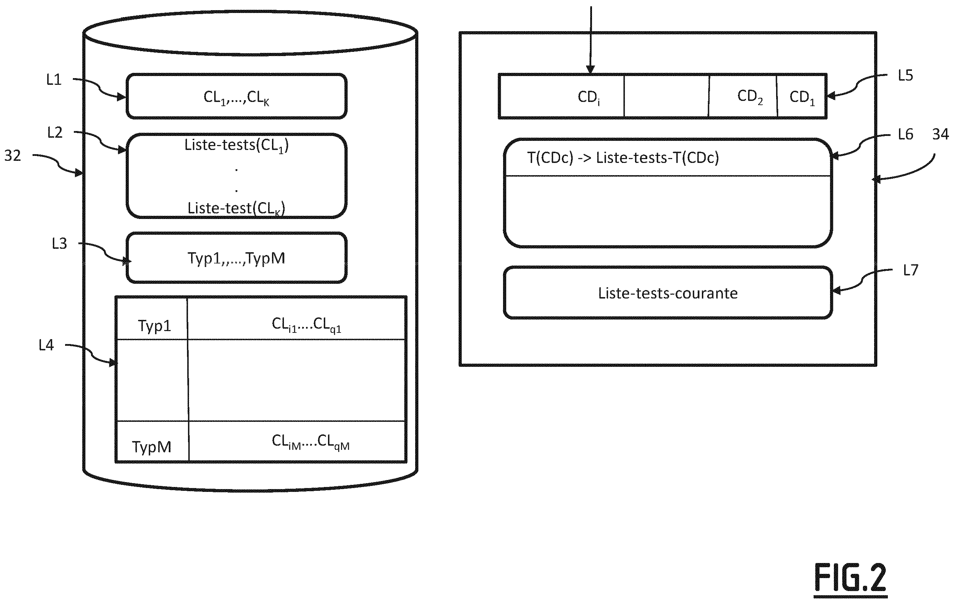

La figure 2 illustre schématiquement des structures de mémorisation de données, par exemple sous forme de listes, utilisées et mises à jour dynamiquement par le procédé de supervision de mise à jour de logiciel de support.

La figure 2 montre d'une part une première unité de mémoire électronique 32 non volatile et une deuxième unité de mémoire électronique 34, adaptées pour stocker des structures de mémorisation de données, par exemple des listes, utilisées par le procédé de supervision de mise à jour de logiciel de support selon un mode de réalisation.

Ces première et deuxième unités de mémoire sont des unités de mémoire d'un dispositif électronique programmable du système de supervision 6.

Dans un mode de réalisation, la première unité de mémoire 32 est configurée pour mémoriser :
- une structure L1 de mémorisation des composants logiciels CL₁ à CL_{K} de l'infrastructure de services 2,
- une structure L2 de mémorisation des tests de non-régression à effectuer pour valider chaque composant logiciel, Liste-tests(CLi),
- une structure L3 de mémorisation des types de commandes de déploiement,
- une structure L4 de mémorisation des composants logiciels impactés par chaque type de commande de déploiement.

Le type de commande de déploiement est relatif au paramètre et/ou au composant logiciel modifié par la commande de déploiement. En d'autres termes, il y a un type de commande par paramètre d'un composant à mettre à jour, et c'est ce même type qui est utilisé quel que soit la valeur du paramètre, et il y a un type de commande par composant à mettre à jour, et c'est ce même type qui est utilisé pour toutes les versions livrées de ce composant.

Dans un mode de réalisation, les structures de mémorisation L1, L2, L3, L4 sont des listes.

Bien entendu, l'utilisation de listes est donnée pour l'exemple, tout type de structure de mémorisation étant utilisable.

Les structures de mémorisation de données L1, L2, L3, L4 sont prédéfinies en fonction de l'infrastructure 2 de services fournis au client.

La deuxième unité de mémoire 34 est configurée pour mémoriser des structures de mémorisation décrites ci-dessous, qui sont mises à jour/gérées dynamiquement par le procédé de supervision.

La deuxième unité de mémoire 34 est configurée pour mémoriser :
- une liste L5 de commandes de déploiement (ou Liste-CD), rangées sous forme d'une file d'attente dans leur ordre d'arrivée, pour traitement dans un ordre « premier arrivé, premier sorti », également appelé FIFO pour « First-In First-Out » ;
- une structure de mémorisation L6 contenant l'ensemble de types des commandes de déploiement non encore approuvées, et pour chaque type de commande de déploiement non encore approuvée, une liste de tests de non-régression à effectuer associée. Avec une autre notation, pour une commande de déploiement CDc de type T(CDc), est mémorisée une liste Liste-tests-T(CDc) ;
- une liste L7 qui est une liste courante de tests de non-régression à effectuer, également appelée « Liste-tests-courante ».

L'utilisation et la mise à jour de ces diverses structures de mémorisation sera détaillée ci-après.

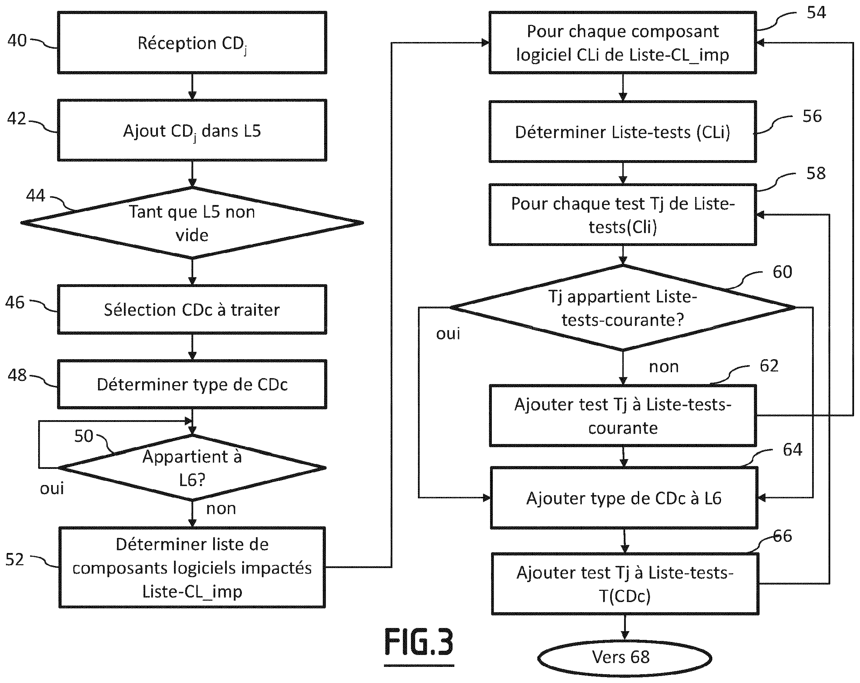

Se référant aux figures 2 et 3, un mode de réalisation d'un procédé de supervision de mise à jour de logiciel de support dans une infrastructure de fourniture de services est décrit.

Ce procédé est mis en œuvre par le système de supervision 6.

Ce procédé trouve notamment des avantages dans un contexte de transmission de mises à jour fréquentes, par exemple toutes les minutes, ou toutes les secondes.

Les mises à jour, sous forme de commandes et/ou de paramètres ou de fichiers de configuration sont reçues au fur et à mesure, sensiblement en temps réel, et mémorisées dans l'unité électronique de stockage centralisé 12.

Le procédé comporte une étape 40 de réception d'une commande de déploiement de mises à jour CDⱼ, suivie d'une étape 42 d'ajout de la commande de déploiement reçue dans une liste de commandes de déploiement à traiter, Liste-CD, référencée L5 à la figure 2.

A l'initialisation du procédé, la liste L5 est vide.

Les étapes 40 et 42 se déroulent en parallèle des étapes suivantes.

Ensuite, tant que la liste L5 de commandes de déploiement est non vide, donc, en d'autres termes, tant qu'il reste des commandes de déploiement en cours de traitement (étape 44), le procédé comporte une étape 46 de sélection d'une commande de déploiement courante CDc, qui est à traiter, et d'effacement de la commande de déploiement CDc de la liste L5.

Il s'agit de la première commande de la liste L5, cette liste étant traitée selon un ordre de traitement FIFO comme indiqué ci-dessus.

Dans un mode de réalisation, l'étape 46 induit autant de tâches parallèles qu'il y a de types de commandes de déploiement différentes en cours.

Le type de commande de déploiement de la commande de déploiement CDc est déterminé à l'étape 48.

Il est ensuite vérifié (vérification 50) si le type de la commande de déploiement CDc appartient à la structure L6 mémorisant l'ensemble de types de commandes de déploiement non encore approuvées.

A l'initialisation du procédé, la structure L6 est vide.

Si la réponse à l'étape de vérification 50 est positive, le procédé se met en attente jusqu'à ce que l'étape de vérification 50 soit négative, indiquant que la commande de déploiement précédente de même type a été approuvée suite au passage avec succès des tests de non-régression associés.

Si la réponse à l'étape de vérification 50 est négative, l'étape 50 est suivie d'une étape 52 de détermination de la liste de composants logiciels CLⱼ impactés par la commande de déploiement CDc. Par exemple, l'étape 52 utilise la structure de mémorisation L4 pour obtenir cette liste de composants logiciels CLᵢ impactés.

Pour chaque composant CLi de la liste de composants impactés (étape 54), une liste associée de tests de non-régression à effectuer est déterminée à l'étape de détermination 56, par exemple en utilisant la structure L2 préalablement mémorisée.

Pour chaque test de non-régression Tⱼ (étape 58) de la liste de tests obtenue à l'étape 56, le procédé comporte une étape de vérification 60 de l'appartenance du test de non-régression Tj à la liste L7 (liste courante de tests de non-régression à effectuer).

A l'initialisation du procédé, la structure L7 est vide.

Si la réponse à l'étape de vérification 60 est négative, le procédé comprend un ajout 62 du test de non-régression Tj à effectuer dans la liste courante de tests à effectuer (liste L7).

L'étape 62 est suivie d'une étape 64 d'ajout du type de commande de déploiement de la commande de déploiement CDc à la structure L6 mémorisant l'ensemble de types de commandes de déploiement non encore approuvées.

Si la réponse à l'étape de vérification 60 est positive, l'étape de vérification 60 est suivie de l'étape 64.

L'étape 64 est suivie d'une étape 66 d'ajout du test de non-régression Tj à la liste de tests de non-régression à effectuer associée au type de commande de la commande de déploiement CDc dans la structure de mémorisation L6, également appelée Liste-tests-T(CDc).

Les étapes 60 à 66 sont répétées pour chaque test de non-régression de la liste de la liste de tests de non-régression associée au composant logiciel impacté composant CLi, et ce pour chaque composant logiciel impacté, comme indiqué à l'étape 54.

Ainsi, les structures de mémorisation L6 et L7 sont mises à jour dynamiquement pour la commande de déploiement courante CDc.

Le procédé se poursuit à l'étape 68 d'exécution de la commande de déploiement courante CDc sur l'environnement de test 6, qui est analogue à l'infrastructure 2.

Il s'agit de contrôler la non-régression sur l'ensemble de tests de non-régression de la commande de déploiement courante CDc dans l'environnement de test avant d'envisager son déploiement dans l'infrastructure 2 qui est utilisée par le client.

Le procédé comprend ensuite une étape 70 consistant à vérifier si la liste courante de tests de non-régression à effectuer (liste L7) est vide. En d'autres termes, l'étape 70 a pour but de vérifier si tous les tests de non-régression de la liste L7 ont été effectués.

En cas de réponse négative à l'étape de vérification 70, cette étape est suivie par une étape 72 d'exécution d'un test de non-régression de la liste L7, par exemple le premier test de la liste, référencé test Tp.

Selon une variante, les tests de non-régression de la liste L7 sont exécutés dans un ordre quelconque.

Si le test de non-régression Tp est passé avec succès (vérification 74), il est effacé (étape 76) de la liste courante de tests de non-régression à effectuer L7, puis il est effacé (étape 78) de la liste de tests Liste-tests-T(CDc).

Si le test de non-régression Tₐ n'est pas passé avec succès, l'étape 74, alors la commande de déploiement courante CDc est non approuvée (étape 82).

Lorsque la liste courante de tests de non-régression à effectuer (liste L7) est vide, ou en d'autres termes, lorsque tous les tests de non-régression de la liste ont été effectués avec succès, l'étape 70 est suivie de l'étape 80 consistant à vérifier si la liste de tests de non-régression Liste-tests-T(CDc) associée au type de la commande de déploiement CDc dans la structure de mémorisation L6 est vide. En d'autres termes, le test de l'étape 80 consiste à vérifier si tous les tests de non-régression à effectuer pour le type de commande de la commande de déploiement courante ont été passés avec succès.

En cas de réponse positive à l'étape de vérification 80, cette étape est suivie d'une étape 84 d'approbation de la commande de déploiement courante, par exemple par un marquage associé. Ce marquage peut par exemple être un marquage horodaté et une mémorisation d'informations caractéristiques de la commande de déploiement courante est également effectuée. Par exemple, il s'agit d'une mémorisation d'une signature de la commande, par exemple obtenue par application d'un hachage cryptographique.

Les étapes 82 et 84 sont suivie d'un effacement 86 du type de la commande de déploiement courante CDc de la structure de mémorisation L6.

Le procédé se poursuit ensuite par un retour à l'étape 46 de sélection d'une commande de déploiement suivante à traiter, qui devient alors la commande de déploiement courante.

Avantageusement, le procédé de supervision proposé permet une mise à jour en temps réel des tests de non-régression à effectuer, un traitement des commandes de déploiement dans leur ordre d'arrivée et un déploiement d'une mise à jour sur l'infrastructure de services lorsque l'ensemble des tests de non-régression a été effectué pour tous les composants logiciels impactés par la mise à jour.

Avantageusement, la gestion de la structure de mémorisation L6 permet de ne pas exécuter de commande de déploiement tant qu'il y a encore une commande de déploiement de même type en cours, et de s'assurer qu'une commande de déploiement est approuvée seulement lorsque tous les tests de non-régression associés ont été passés avec succès.

Ainsi, le bon fonctionnement et la sécurité sont assurés pour la fourniture de services par l'infrastructure de fourniture de services à un client.

## Revendications

1. Procédé de supervision de mises à jour de logiciel de support dans une infrastructure de fourniture de services, le procédé comportant une réception d'une pluralité de mises à jour du logiciel de support, chaque mise à jour comportant au moins une commande de modification du logiciel de support et/ou au moins un paramètre ou un fichier de configuration, et une réception (40) d'au moins une commande de déploiement de mise(s) à jour impactant au moins un composant du logiciel de support, le procédé de supervision étant mis en œuvre par au moins un processeur d'un dispositif électronique programmable et comportant des étapes de :
- suite à une réception (40) de commandes de déploiement de mise à jour, sélection (46) d'une commande de déploiement à traiter, dans l'ordre d'arrivée, dite commande de déploiement courante,
- détermination (48) d'un type de ladite commande de déploiement courante,
- vérification (50) de la présence ou de l'absence dudit type de ladite commande de déploiement courante dans une structure de mémorisation (L6) contenant l'ensemble de types de commandes de déploiement non encore approuvées ;
- uniquement en son absence, détermination (52) d'au moins un composant logiciel impacté par la mise à jour en fonction du type de commande de déploiement, et pour chacun desdits composants logiciels impactés,
- détermination (56) d'une liste associée de tests de non régression à effectuer ;
- pour chaque test de ladite liste associée de tests de non-régression :
- vérification (60) de l'appartenance dudit test à une structure de mémorisation courante de tests de non-régression (L7) à effectuer et :
- en cas d'absence :
- ajout (62) dudit test à ladite structure de mémorisation courante de tests de non-régression (L7) à effectuer; et
- ajout (64) dudit type à ladite structure de mémorisation (L6) contenant l'ensemble de types de commandes de déploiement non encore approuvées ;
- en cas d'appartenance :
- ajout (64) dudit type à ladite structure de mémorisation (L6) contenant l'ensemble de types de commandes de déploiement non encore approuvées ;
- ajout (66) dudit test à une liste de tests de non-régression à effectuer associée au type de commande de la commande de déploiement dans la structure de mémorisation (L6) contenant l'ensemble de types de commandes de déploiement non encore approuvées ,
- exécution (68) de ladite commande de déploiement courante dans un environnement de test, l'environnement de test étant analogue à ladite infrastructure de fourniture de services,
- exécution (72) successive des tests de non-régression de la structure de mémorisation courante de tests de non-régression (L7) à effectuer, et lorsque tous les tests de non-régression de ladite structure de mémorisation courante et tous les tests de la structure de mémorisation de tests de non-régression associée audit type de commande de déploiement sont exécutés avec succès, approbation (84) d'une exécution de ladite commande de déploiement courante dans ladite infrastructure de fourniture de services.

2. Procédé selon la revendication 1, dans lequel chacune desdites structures de mémorisation est une liste.

3. Procédé selon la revendication 1 ou 2, dans lequel, suite à l'approbation (84) de ladite commande de déploiement courante, le type de ladite commande de déploiement est effacé (86) dudit ensemble de types de commandes de déploiement non encore approuvées.

4. Procédé selon l'une des revendications 1 à 3, dans lequel l'étape de détermination (48) du type de commande de déploiement met en œuvre une structure de mémorisation de types de commandes déploiement (L3) préalablement mémorisée, et la détermination (52) d'au moins un composant logiciel impacté utilise une structure (L4) mémorisant une liste de composants logiciels impactés par chaque type de commande de déploiement.

5. Procédé selon l'une des revendications 1 à 4, dans lequel l'approbation (84) comporte un marquage horodaté et une mémorisation d'informations caractéristiques de ladite commande de déploiement.

6. Programme d'ordinateur comportant des instructions logicielles qui, lorsqu'elles sont exécutées par un dispositif électronique programmable, mettent en œuvre un procédé de supervision de mise à jour de logiciel de support conformes aux revendications 1 à 5.

7. Système de supervision de mise à jour de logiciel de support dans une infrastructure (2) de fourniture de services, le système comportant un module (20) de réception d'une pluralité de mises à jour du logiciel de support, chaque mise à jour comportant au moins une commande de modification du logiciel de support et/ou au moins un paramètre ou un fichier de configuration, et de réception d'au moins une commande de déploiement de mise à jour impactant au moins un composant du logiciel de support, le système de supervision comportant au moins un processeur d'un dispositif électronique programmable configuré pour mettre en œuvre :
- un module (20) de sélection d'une commande de déploiement à traiter, dans l'ordre d'arrivée, dite commande de déploiement courante,
- un module de détermination (22) d'un type de ladite commande de déploiement courante, de vérification de la présence ou de l'absence dudit type de ladite commande de déploiement courante dans une structure de mémorisation (L6) contenant l'ensemble de types de commandes de déploiement non encore approuvées, et uniquement en son absence, de détermination d'au moins un composant logiciel impacté par la mise à jour en fonction du type de commande de déploiement, et pour chacun desdits composants logiciels impactés,
- un module (24,26) de détermination d'une liste associée de tests de non régression à effectuer, configuré, pour chaque test de ladite liste associée de tests de non-régression :
- vérifier l'appartenance dudit test à une structure de mémorisation courante de tests de non-régression à effectuer et,
- - en cas d'absence :
- ajouter ledit test à ladite structure de mémorisation courante de tests de non-régression (L7) à effectuer; et
- ajouter ledit type à ladite structure de mémorisation (L6) contenant l'ensemble de types de commandes de déploiement non encore approuvées ;
- en cas d'appartenance :
- ajouter ledit type à ladite structure de mémorisation (L6) contenant l'ensemble de types de commandes de déploiement non encore approuvées ;
- ajouter ledit test à une liste de tests de non-régression à effectuer *associée* audit type de commande de la commande de déploiement dans la structure de mémorisation (L6) contenant l'ensemble de types de commandes de déploiement non encore approuvées ;
- un module (28) d'exécution de ladite commande de déploiement courante dans un environnement de test (8), l'environnement de test étant analogue à ladite infrastructure (2) de fourniture de services,
- un module d'exécution successive des tests de non-régression de la structure de mémorisation courante de tests de non-régression (L7) à effectuer, et lorsque tous les tests de non-régression de ladite structure de mémorisation courante et tous les tests de la structure de mémorisation de tests de non-régression associée audit type de commande de déploiement sont exécutés avec succès, un module (30) d'approbation d'une exécution de ladite commande de déploiement courante dans ladite infrastructure de fourniture de services.

8. Système selon la revendication 8, comportant en outre une unité électronique de stockage centralisé (12) configurée pour mémoriser des commandes de modification du logiciel de support, des commandes de modification d'au moins un paramètre ou d'un fichier de configuration, et/ou d'au moins une commande de déploiement de mise à jour.

9. Système selon l'une des revendications 8 ou 9, comportant en outre la première unité de mémoire (32) configurée pour mémoriser :
- une structure (L1) de mémorisation des composants logiciels (CL₁ à CL_{K}) de l'infrastructure de services (2),
- une structure (L2) de mémorisation des tests de non-régression à effectuer pour valider chaque composant logiciel (Liste-tests(CLi)),
- une structure (L3) de mémorisation des types de commandes de déploiement,
- une structure (L4) de mémorisation des composants logiciels impactés par chaque type de commande de déploiement.

10. Système selon l'une des revendications 8 à 10, comportant en outre une deuxième unité de mémoire (34) configurée pour mémoriser :
- une liste (L5) de commandes de déploiement, rangées sous forme d'une file d'attente dans leur ordre d'arrivée,
- une structure de mémorisation (L6) contenant un ensemble de types des commandes de déploiement non encore approuvées, et pour chaque type de commande de déploiement non encore approuvée, une liste de tests de non-régression à effectuer associée (Liste-tests-T(CDc)) ;
- une liste (L7) courante de tests de non-régression à effectuer.

## Patentansprüche

1. Überwachungsverfahren von Aktualisierungen für Trägersoftware in einer Dienstbereitstellungsinfrastruktur, das Verfahren umfassend ein Empfangen einer Vielzahl von Aktualisierungen der Trägersoftware, jede Aktualisierung umfassend mindestens einen Änderungsbefehl der Trägersoftware und/oder mindestens einen Parameter oder eine Konfigurationsdatei, und ein Empfangen (40) von mindestens einem Aktualisierungsentfaltungsbefehl, der sich auf mindestens eine Komponente der Trägersoftware auswirkt, wobei das Überwachungsverfahren von mindestens einem Prozessor einer programmierbaren elektronischen Vorrichtung implementiert wird und die folgenden Schritte umfasst:
- nach einem Empfang (40) von Aktualisierungsentfaltungsbefehlen, Auswählen (46) eines zu bearbeitenden Entfaltungsbefehls in der Ankunftsreihenfolge, bezeichnet als aktueller Entfaltungsbefehl,
- Bestimmen (48) eines Typs des aktuellen Entfaltungsbefehls,
- Überprüfen (50) des Vorhandenseins oder Nichtvorhandenseins des Typs des aktuellen Entfaltungsbefehls in einer Speicherstruktur (L6), die den Satz von Typen von noch nicht genehmigten Entfaltungsbefehlen enthält;
- nur wenn nicht vorhanden, Bestimmen (52) von mindestens einer Softwarekomponente, die von der Aktualisierung betroffen ist, basierend auf dem Typ des Entfaltungsbefehls, und für jede der betroffenen Softwarekomponenten,
- Bestimmen (56) einer assoziierten Liste von durchzuführenden Nichtregressionstests;
- für jeden Test aus der assoziierten Liste von Nichtregressionstests:
- Überprüfen (60) der Zugehörigkeit des Tests zu einer aktuellen Speicherstruktur von durchzuführenden Nichtregressionstests (L7), und:
- im Fall von Nichtvorhandensein:
- Hinzufügen (62) des Tests zu der aktuellen Speicherstruktur der durchzuführenden Nichtregressionstests (L7); und
- Hinzufügen (64) des Typs zu der Speicherstruktur (L6), die den Satz von Typen von noch nicht genehmigten Entfaltungsbefehlen enthält;
- im Fall von Zugehörigkeit:
- Hinzufügen (64) des Typs zu Speicherstruktur (L6), die den Satz von Typen von noch nicht genehmigten Entfaltungsbefehlen enthält;
- Hinzufügen (66) des Tests zu einer Liste von durchzuführenden Nichtregressionstests, die mit dem Befehlstyp des Entfaltungsbefehls in der Speicherstruktur (L6) assoziiert sind, die den Satz von Typen noch nicht genehmigter Entfaltungsbefehle enthält,
- Ausführen (68) des aktuellen Entfaltungsbefehls in einer Testumgebung, wobei die Testumgebung analog zu der Dienstbereitstellungsinfrastruktur ist,
- sukzessives Ausführen (72) der Nichtregressionstests der aktuellen Speicherstruktur von durchzuführenden Nichtregressionstests (L7), und wenn alle Nichtregressionstests der aktuellen Speicherstruktur und alle Tests der Speicherstruktur von Nichtregressionstests, die mit dem Typ des Entfaltungsbefehls assoziiert ist, erfolgreich ausgeführt werden, Genehmigen (84) einer Ausführung des aktuellen Entfaltungsbefehls in der Dienstbereitstellungsinfrastruktur.

2. Verfahren nach Anspruch 1, wobei jede der Speicherstrukturen eine Liste ist.

3. Verfahren nach Anspruch 1 oder 2, wobei nach Genehmigen (84) des aktuellen Entfaltungsbefehls der Typ des Entfaltungsbefehls aus dem Satz von Typen von noch nicht genehmigten Entfaltungsbefehlen gelöscht (86) wird.

4. Verfahren nach einem der Ansprüche 1 bis 3, wobei der Schritt eines Bestimmens (48) des Typs des Entfaltungsbefehls eine zuvor gespeicherte Struktur (L3) zum Speichern von Entfaltungsbefehlstypen implementiert und ein Bestimmen (52) mindestens einer betroffenen Softwarekomponente eine Struktur (L4) verwendet, die eine Liste von Softwarekomponenten speichert, die von jedem Typ von Entfaltungsbefehl betroffen sind.

5. Verfahren nach einem der Ansprüche 1 bis 4, wobei das Genehmigen (84) eine Zeitstempelkennzeichnung und ein Speichern von Informationen umfasst, die charakteristisch für den Entfaltungsbefehl sind.

6. Rechnerprogramm, umfassend Softwareanweisungen, die, wenn sie von einer programmierbaren elektronischen Vorrichtung ausgeführt werden, ein Überwachungsverfahren von Aktualisierungen für Trägersoftware implementieren, nach den Ansprüchen 1 bis 5.

7. Überwachungssystem von Aktualisierungen für Trägersoftware in einer Dienstbereitstellungsinfrastruktur (2), das System umfassend ein Modul (20) zum Empfangen einer Vielzahl von Aktualisierungen der Trägersoftware, jede Aktualisierung umfassend mindestens einen Änderungsbefehl der Trägersoftware und/oder mindestens einen Parameter oder eine Konfigurationsdatei, und ein Empfangen von mindestens einem Aktualisierungsentfaltungsbefehl, der sich auf mindestens eine Komponente der Trägersoftware auswirkt, das Überwachungssystem umfassend mindestens einen Prozessor einer programmierbaren elektronischen Vorrichtung, die so konfiguriert ist, um Folgendes zu implementieren:
- ein Modul (20) zum Auswählen eines zu bearbeitenden Entfaltungsbefehls in der Ankunftsreihenfolge, bezeichnet als aktueller Entfaltungsbefehl,
- ein Bestimmungsmodul (22) eines Typs des aktuellen Entfaltungsbefehls, zur Überprüfung des Vorhandenseins oder Nichtvorhandenseins des Typs des aktuellen Entfaltungsbefehls in einer Speicherstruktur (L6), die den Satz von Typen von noch nicht genehmigten Entfaltungsbefehlen enthält, und nur wenn nicht vorhanden, Bestimmen von mindestens einer Softwarekomponente, die von der Aktualisierung betroffen ist, basierend auf dem Typ des Entfaltungsbefehls, und für jede der betroffenen Softwarekomponenten,
- ein Modul (24, 26) zum Bestimmen einer assoziierten Liste von durchzuführenden Nichtregressionstests, das für jeden Test aus der assoziierten Liste von Nichtregressionstests zu Folgendem konfiguriert ist:
- Überprüfen der Zugehörigkeit des Tests zu einer aktuellen Speicherstruktur von durchzuführenden Nichtregressionstests, und
- im Fall von Nichtvorhandensein:
- Hinzufügen des Tests zu der aktuellen Speicherstruktur der durchzuführenden Nichtregressionstests (L7); und
- Hinzufügen des Typs zu der Speicherstruktur (L6), die den Satz von Typen von noch nicht genehmigten Entfaltungsbefehlen enthält;
- im Fall von Zugehörigkeit:
- Hinzufügen des Typs zu der Speicherstruktur (L6), die den Satz von Typen von noch nicht genehmigten Entfaltungsbefehlen enthält;
- Hinzufügen des Tests zu einer Liste von durchzuführenden Nichtregressionstests, die mit dem Befehlstyp des Entfaltungsbefehls in der Speicherstruktur (L6) assoziiert sind, die den Satz von Typen noch nicht genehmigter Entfaltungsbefehle enthält;
- ein Modul (28) zum Ausführen des aktuellen Entfaltungsbefehls in einer Testumgebung, wobei die Testumgebung (8) analog zu der Dienstbereitstellungsinfrastruktur (2) ist,
- ein Modul zum sukzessiven Ausführen der Nichtregressionstests der aktuellen Speicherstruktur von durchzuführenden Nichtregressionstests (L7), und wenn alle Nichtregressionstests der aktuellen Speicherstruktur und alle Tests der Speicherstruktur von Nichtregressionstests, die mit dem Typ des Entfaltungsbefehls assoziiert ist, erfolgreich ausgeführt werden, ein Modul (30) zum Genehmigen einer Ausführung des aktuellen Entfaltungsbefehls in der Dienstbereitstellungsinfrastruktur.

8. System nach Anspruch 8, ferner umfassend eine zentrale elektronische Speichereinheit (12), die konfiguriert ist, um Änderungsbefehle der Trägersoftware, Änderungsbefehle mindestens eines Parameters oder einer Konfigurationsdatei und/oder mindestens einen Aktualisierungsentfaltungsbefehl zu speichern.

9. System nach einem der Ansprüche 8 oder 9, ferner umfassend die erste Speichereinheit (32), die konfiguriert ist, um Folgendes zu speichern:
- eine Struktur (L1) zum Speichern der Softwarekomponenten (CL₁ bis CL_{K}) der Dienstinfrastruktur (2),
- eine Struktur (L2) zum Speichern der Nichtregressionstests, die zum Validieren jeder Softwarekomponente durchgeführt werden müssen (Testliste(CLi)),
- eine Struktur (L3) zum Speichern der Typen von Entfaltungsbefehlen,
- eine Struktur (L4) zum Speichern von Softwarekomponenten, die von jedem Typ von Entfaltungsbefehl betroffen sind.

10. System nach einem der Ansprüche 8 bis 10, ferner umfassend eine zweite Speichereinheit (34), die konfiguriert ist, um Folgendes zu speichern:
- eine Liste (L5) von Entfaltungsbefehlen, die in Form einer Warteschlange in der Ankunftsreihenfolge angeordnet sind,
- eine Speicherstruktur (L6), die einen Satz von Typen der noch nicht genehmigten Entfaltungsbefehlen und für jeden Typ von noch nicht genehmigten Entfaltungsbefehlen eine assoziierte Liste von durchzuführenden Nichtregressionstests (Testliste-T(CDc)) enthält;
- eine aktuelle Liste (L7) durchzuführender Nichtregressionstests.

## Claims

1. A method for supervising the updating of the support software of a service providing infrastructure, the method including receiving a plurality of updates of the support software, each update including at least one command to modify the support software and/or at least one parameter or configuration file, and receiving (40) at least one deployment command of update(s) impacting at least one component of the support software, the supervision method being implemented by at least one processor of a programmable electronic device and including steps of:
- following a receipt (40) of update deployment commands, selection (46) of a deployment command to process, in the order of arrival, said current deployment command,
- determination (48) of a type of said current deployment command,
- verification (50) of the presence or absence of said type of said current deployment command in a storage structure (L6) containing all types of deployment commands not yet approved;
- only in the absence thereof, determination (52) of at least one software component impacted by the update depending on the type of deployment command, and, for each of said impacted software components,
- determination (56) of an associated list of regression tests to be performed;
- for each test of said associated list of regression tests:
- verification (60) of whether said test belongs to a current storage structure of regression tests (L7) to be performed; and
- in the absence thereof:
- adding (62) said test to said current storage structure of regression tests (L7) to be performed; and
- adding (64) said type to said storage structure (L6) containing all types of deployment commands not yet approved;
- if said test belongs to said structure:
- adding (64) said type to said storage structure (L6) containing all types of deployment commands not yet approved;
- adding (66) said test to a list of regression tests to be performed associated with the type of said deployment command in the storage structure (L6) containing all types of deployment commands not yet approved.
- execution (68) of said current deployment command in a test environment, the test environment being analogous to said service providing infrastructure,
- successive execution (72) of the regression tests of the current memory structure of regression tests (L7) to perform, and when all the regression tests of said current memory structure and all the tests of the memory structure of regression tests associated with said type of deployment command are executed successfully, approval (84) of an execution of said current deployment command in said service providing infrastructure.

2. The method according to claim 1, wherein each of said memory structures is a list.

3. The method according to claims 1 or 2, wherein, following the approval (84) of said current deployment command, the type of said deployment command is erased (86) from said set of types of deployment commands not yet approved.

4. The method according to one of claims 1 to 3, wherein the step of determination (48) of the type of deployment command implements a memory structure of types of deployment commands (L3) previously memorized, and the determination (52) of at least one impacted software component uses a structure (L4) memorizing a list of software components impacted by each type of deployment command.

5. The method according to one of claims 1 to 4, wherein the approval (84) includes a timestamp marking and a memorization of characteristic information of said deployment command.

6. A computer program including software instructions which, when executed by a programmable electronic device, implement a method for supervising the updating of the support software in accordance with claims 1 to 5.

7. A system for supervising the updating of the support software of a service providing infrastructure (2), the system including a module (20) for receiving a plurality of updates of the support software, each update including at least one command to modify the support software and/or at least one parameter or configuration file, and for receiving at least one update deployment command impacting at least one component of the support software, the supervision system including at least one processor of a programmable electronic device configured to implement:
- a module (20) for selecting a deployment command to process, in the order of arrival, said current deployment command,
- a determination module (22) configured to determine a type of said current deployment command, to verify the presence or absence of said type of said current deployment command in a storage structure (L6) containing the set of deployment command types not yet approved, and, only in the absence thereof, to determine at least one software component impacted by the update depending on the type of deployment command, and, for each of said impacted software components,
- a module (24, 26) configured to determine an associated list of regression tests to be performed, said module being further configured, for each test of said associated list of regression tests:
- to verify whether said test belongs to a current storage structure of regression tests (L7) to be performed; and
- if absent:
- to add said test to said current storage structure of regression tests (L7) to be performed; and
- to add said type to said storage structure (L6) containing the set of deployment command types not yet approved;
- if present:
- to add said type to said storage structure (L6) containing the set of deployment command types not yet approved; and
- to add said test to a list of regression tests to be performed associated with said type of deployment command in the storage structure (L6) containing the set of deployment command types not yet approved;
- a module (28) for executing said current deployment command in a test environment (8), the test environment being analogous to said service providing infrastructure (2),
- a successive execution of the regression tests of the current memory structure of regression tests (L7) to be performed, and when all the regression tests of said current memory structure and all the tests of the memory structure of regression tests associated with said type of deployment command are executed successfully, a module (30) for approving an execution of said current deployment command in said service providing infrastructure.

8. The system according to claim 8, further including a centralized electronic storage unit (12) configured to memorize modification commands of the support software, modification commands of at least one parameter or a configuration file, and/or at least one update deployment command.

9. The system according to one of claims 8 or 9, further including the first memory unit (32) configured to memorize:
- a structure (L1) for memorizing the software components (CL₁ to CL_{K}) of the service providing infrastructure (2),
- a structure (L2) for memorizing the regression tests to be performed to validate each software component (Test-list(CLi)),
- a structure (L3) for memorizing the types of deployment commands,
- a structure (L4) for memorizing the software components impacted by each type of deployment command.

10. The system according to one of claims 8 to 10, further including a second memory unit (34) configured to memorize:
- a list (L5) of deployment commands, arranged in a queue in their order of arrival,
- a memory structure (L6) containing a set of types of deployment commands not yet approved, and for each type of deployment command not yet approved, an associated list of regression tests to be performed (Test-list-T(CDc));
- a current list (L7) of regression tests to be performed.
